# EUROPEAN PATENT APPLICATION

(11) **EP 1 086 841 A1**
(43) Date of publication of application: **28.03.2001**
(21) Application number: 00915546.6
(22) Date of filing: 14.04.2000
(51) Int. Cl.: B60J 11/00

(54) **BODY COVER DEVICE FOR CAR**

(30) Priority: 16.04.1999 JP 10950499
(71) Applicant: La Parole Co., Ltd., Hiroshima-shi, Hiroshima 732-0052 (JP)
(72) Inventor: FUKAGAWA, Yoshiharu, c/o La Parole CO.,LTD, Hiroshima-shi, Hiroshima 732-0052 (JP)
(74) Representative: Bertrand, Didier
(86) International application number: JP0002468
(87) International publication number: WO0063040

(57) **Abstract**

A general-purpose trunk storing type body cover device for car which prevents a body from being damaged and eliminates the need for modification, comprising a device main body formed so that a body cover for car can be delivered and wound up and a stand part on which the device main body is installed, wherein an elastic supporting member is installed extendably on the stand part so that the cover device can be stored in the state of being resiliently supported between the inner walls of a trunk room by the elastic supporting member.

## Description

### TECHNICAL FIELD

The present invention relates to a body cover device for car, particularly, to a body cover device for car whereby a body cover can be mounted and stored with one-touch operation.

### BACKGROUND TECHNOLOGY

One known arrangement is to simply mount/demount a body cover, disclosed to the public by the Japanese Patent No.Hei 8-104142.

This includes a porch mounted on the reverse of a trunk lid for storing a body cover, the body cover being connected at its end to the porch. A car body is covered simply by pulling the body cover at its end out of a gap between the base edge of the trunk lid and the edge of a trunk room opening, and is uncovered simply by pulling the body cover therein at the porch side. The body cover is stored in the porch provided on the reverse of the trunk lid.

Other known arrangements are to pull the body cover out in a similar way but uncover and store it in automatic processes.

For example, as disclosed to the public by the Japanese Patent No. Hei 3-38218, a winder for rotating a roller, on which a body cover is wound, in the direction of wind-up is mounted on the reverse of a trunk lid, whereby the body cover can be normally stored in a trunk and a car body is covered by pulling the body cover at its end out of a gap formed between the base edge of the trunk lid and the edge of a trunk room opening, followed by spreading over the roof of the car body, similarly to the above-described the prior art. The body cover is uncovered by operating the winder for automatically winding the body cover to be stored in the trunk on the roller.

The above-described prior arts involve the following outstanding problems, because the porch or the winder, whichever, are mounted on the reverse of the trunk lid.

That is, fixing work is required for mounting the porch or the winder on the trunk lid and the modification of the trunk lid or the like is thus required.

The body cover having a substrate thin but wide enough to cover the car body is considerably heavy. Therefore, a load is applied directly to the trunk lid in the above-described structure even when the body cover is stored in the porch or wound on the roller.

The trunk lid is not so much rigid in consideration of the structure of the car body an still a great load is applied to the trunk lid, the porch, mounted on the reverse thereof or mounting means for the winder as the heavy body cover remains stored in the trunk during running, so that troubles including the transformation of the trunk lid and the falling of the mounting means would occurred.

Therefore, it has been difficult to put technology on storing the body cover device for car into practical use.

### DISCLOSURE OF THE INVENTION

For the purpose of the solution of the above-described problems:

According to claim 1 of the invention, the cover device for car which comprises the device main body formed so that the body cover for car can be delivered and wound up and the stand part on which the device main body is installed, wherein the elastic supporting member is installed extensibly on the stand part so that the cover device can be stored in the state of being resiliently supported between the inner walls of the trunk room, can be stored and arranged easily in the trunk room without being modified and damaged and still used more conveniently because of easy wind-up and delivery of the body cover.

According to claim 2 of the invention, the elastic supporting member can be resiliently supported in vertical in the trunk room so that the cover device can be formed to be resiliently supported at the most structurally rigid position in the trunk room.

According to claim 3 of the invention, the device main body is oscillatably installed on the stand part in vertical so as to be supported at its spring-up position during the period of usage and suspended during the period of no usage, providing easy handling during covering the car body and stable storage of the relatively heavier body cover in the trunk room during the period of no usage, permitting the least possible load on the stand part during running on a bad road and improving durability.

According to claim 4 of the invention, the device main body is installed on the stand part so that the body cover delivery and wind-up port provided in the device main body may face the gap formed between the base edge of the trunk lid and the edge of the trunk room opening, ensuring delivery of the body cover at its end from the gap formed between the base edge of the trunk lid and the edge of the trunk room to the side of the rear glass, allowing a user to pull the body cover out easily and providing more convenience in use.

According to clam 5 of the invention, the device main body comprises a drum on which the body cover is wound and driving means for rotating the drum to the direction of delivery of the body cover, so that the body cover can be semiautomatically delivered and the car body of the car can be covered very easily.

According to claim 6 of the invention, the driving means for rotating the drum to the direction of delivery of the body cover includes the delivery shaft mounted with the spring and connected to the drum on which the body cover is wound via the one-way clutch and energy accumulating means for resiliently acting the spring with the rotation of the delivery shaft in the opposite direction of delivery of the body cover so that the delivery shaft can be rotated with the resilience of the spring following the operation of the energy accumulating means to allow easy delivery of the body cover with simple mechanical operation.

According to claim 7 of the invention, the winder for winding the delivered body cover is provided on the drum on which the body cover is wound to allow automatic wind-up and storage of the body cover in the trunk room.

According to claim 8 of the invention, in order to prevent the deformation of the body cover during delivery and windup, the pair of core materials extending in parallel to the direction of delivery and wind-up is provided on the body cover to allow smooth delivery and windup of the body cover.

According to claim 9 of the invention, the device main body is detachably mounted on the stand part so that the device main body can be removed and stored during the period of no use and easily mounted during the period of usage, providing more convenience in use.

According to claim 10 of the invention, the stand part comprises the outside cylinder erected on the leg seat, the bottomed inside cylinder slidably arranged in the outside cylinder and oscillatably mounted with the device main body, the bar slidably arranged in the inside cylinder and provided with the contact member at the end, and the spring laid between the bottom of the bar and the bottom of the inside cylinder, so that the stand part can be stored and fixed in the trunk lid in a simple structure.

According to claim 11 the invention, the engagement means is provided between the bar and the inside cylinder so as to be locked to the inside cylinder at the position of pushing down the bar, so that the cover device can be fixed into the trunk lid easily.

### BRIEF DESCRIPTION OF THE DRAWINGS

Fig.1 is an explanatory drawing in a side view of a cover device according to a first embodiment.
Fig.2 is a front view of the cover device.
Fig.3 is a plan view of the cover device.
Fig.4 is an explanatory drawing showing the condition of the cover device during the period of usage.
Fig.5 is an explanatory drawing in a sectional view of a device main body.
Fig.6 is a sectional view along a line I-I shown in Fig.5.
Fig.7 is a sectional view along a line II-II shown in Fig.5.
Fig.8 is a sectional view along a line II-III shown in Fig.5.
Fig.9 is an explanatory drawing showing a body cover.
Fig.10 is an explanatory drawing showing the condition of the body cover during the period of usage.
Fig.11 is an explanatory drawing showing the cover device according to a second embodiment.
Fig.12 is an explanatory drawing showing a mounting portion of the device main body of the cover device.
Fig.13 is an explanatory drawing in a side view of the mounting portion.
Fig.14 is an explanatory drawing in a side view of the mounting portion.
Fig.15 is an explanatory drawing showing an elastic supporting portion of a stand part of the cover device.
Fig.16 is an explanatory drawing showing the cover device according to a third embodiment.
Fig. 17 is an explanatory drawing in a side view of the mounting portion of the device main body of the cover device.
Fig.18 is an explanatory drawing in a front view of the mounting portion.
Fig.19 is an explanatory drawing showing the cover device according to a fourth embodiment.
Fig.20 is an explanatory drawing showing the cover device according to a fifth embodiment.

### BEST MODES FOR CARRYING OUT THE INVENTION

A body cover device for car according to the invention comprise a device main body formed so that a body cover for car can be delivered and wound up and a stand part on which the device main body is installed, wherein an elastic supporting member is installed extensibly on the stand part so that the cover device can be stored in the state of being resiliently supported between the inner walls of a trunk room by the elastic supporting member.

The device main body includes a drum on which the body cover is wound and driving means for rotating the drum to the direction of delivery of the body cover.

It may be considered that the driving means for rotating the drum in the direction of delivery of the body cover has a delivery shaft, to which a spring such as a spiral spring is secured, connected to the drum on which the body cover is wound via a one-way clutch, and energy accumulating means for resiliently acting the spring with the rotation of the delivery shaft in the opposite direction of delivery of the body cover, so that the delivery shaft is rotated with the resilience of the spring following the operation of the energy accumulating means to cause the delivery of the body cover. The energy accumulating means is in the form, not limited in particular, of causing the resilient action of the spring.

This structure allows the easy, semi-automatic delivery of the body cover with mechanically simple operation, resulting in easy covering work.

Further, if a winder for winding the body cover after delivered is provided on the drum on which the body cover is wound, the body cover covering the car body can automatically be wound up and stored in a trunk room after unlocking of locking means.

The above-described structure allows easy storage and arrangement of the body cover device in the trunk room without being modified and damaged and easy delivery and wind-up of the body cover.

It is preferable that the elastic supporting member is resiliently supported in vertical.

For example, the stand part is in a nesting form consisting of an outside cylinder erected on a leg seat, an bottomed inside cylinder slidably arranged in the outside cylinder and oscillatably mounted with the device main body and a bar slidably arranged in the inside cylinder and provided with a contact member at the end, wherein a spring is laid between the bottom of the bar and the bottom of the inside cylinder so that the inside cylinder can be fixed at a desired position and the bar can be kept energized upward by the spring.

This structure allows resilient support of the device at the most structurally rigid position in the trunk room, resulting in the body cover device to be stably stored and arranged in the trunk room and the device to be simplifed.

It is also preferable that engagement means is provided between the bar and the inside cylinder to allow locking of the bar, pushed down, to the inside cylinder. This structure allows easy fixing work in the trunk lid.

The device main body is oscillatably installed on the stand part in vertical so as to be supported at a spring-up position during the period of usage an to be suspended during the period of no usage.

For example, the device main body is oscillatably connected to the stand via a supporting arm and the supporting arm is supported by supporting means such as a spring. If the device main body is supported at the spring-up position when a car body is covered with the body cover, the device is located closer to a worker, resulting in easy handling.

On the other hand, during the period of no usage, namely, when the body cover is stored in the trunk room, the relatively heavy device main body is suspended so as to be released from an overhung condition and stably stored in the trunk room.

Therefore, the least possible load is applied to the stand part supporting the device main body during running on, for example, a rough road and there is no possibility of damaging the supporting arm at its base end, providing superiority in durability.

It is desirable that the device main body is mounted on the stand part so that a body cover delivery and wind-up port provided in the device main body may face a gap formed between the base edge of the trunk lid and the edge of a trunk room opening.

Specifically, the delivery and winding port is provided in a cylindrical case storing the drum of the device main body and the delivery and wind-up port located where the device main body is supported in the state of being sprung up is directed to the gap formed between the base edge of the trunk lid and the edge of the trunk room opening.

This structure ensures delivery of the body cover at its end out of the gap to the side of a rear glass.

A delivery length can be properly set, such that the body cover is grasped at its end of and pulled from the outside of the trunk room. After pulled, the body cover can be spread over the car body and locked to the car body by using locking means such as a hook provided on the body cover.

In order to prevent the deformation of the body cover when delivered and wound up, a pair of core materials extending in parallel to the direction of windup can be provided in the body cover.

Although it is difficult to deliver and move a general soft and flexible body cover out of the trunk room along the rear glass, the core materials permit such movement to be smoothed and ensures in-order winding of the body cover to be stored on the drum. The core materials can favorably be elastic materials such as spring steel materials.

The device main body can also be detachably mounted on the stand. The device main body is removed and stored during the period of no usage and simply mounted when used, providing more convenience in use.

As above-described, according to this invention, the high quality body cover device offers applicability to various types of cars and high flexibility in operation.

The body cover device is easily stored and fixed in the car body, particularly, in the trunk room without being modified so that the body cover can be semi-automatically delivered and almost fully automatically stored, providing more convenience in use and extremely easy work for body covering through body cover storage, usually requiring much labor.

The concrete embodiments of this invention are described with reference to drawings.

### 1^{ST} Embodiment

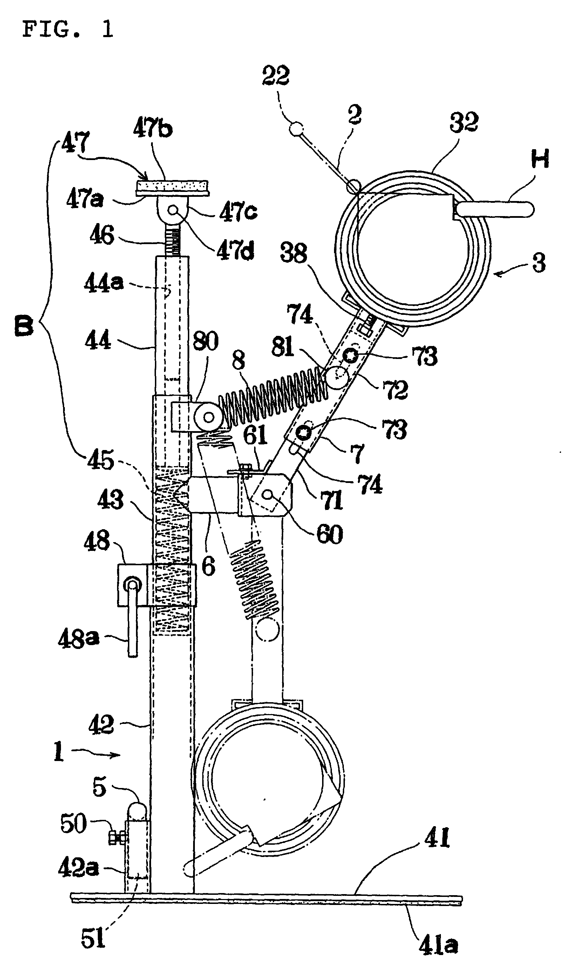

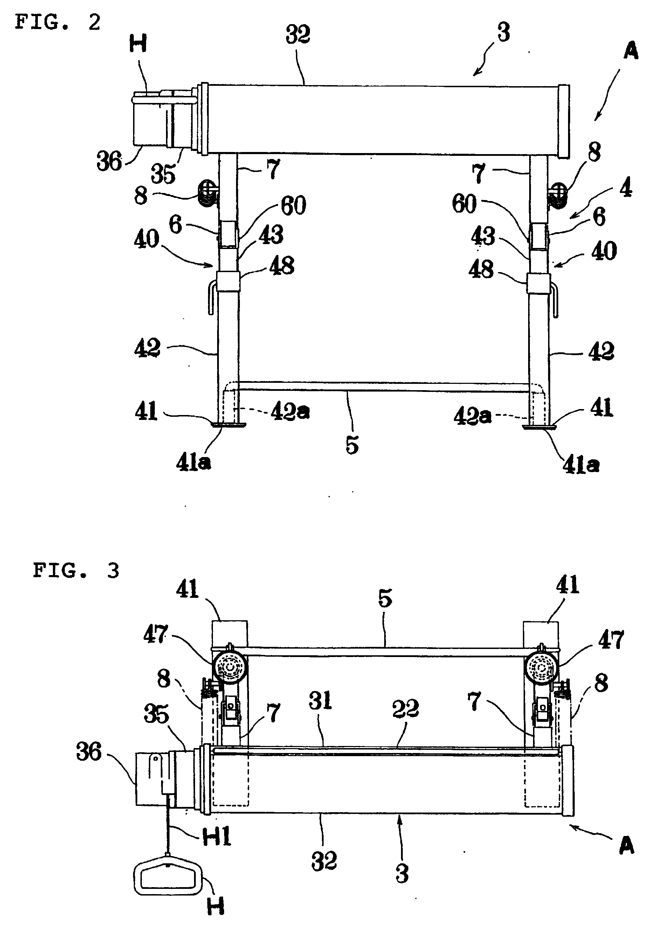

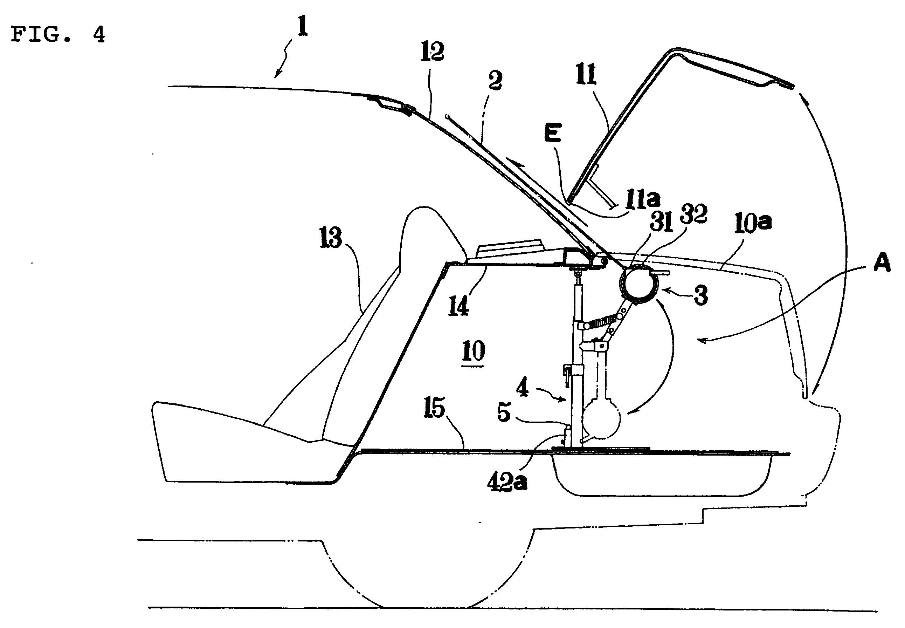

Fig.1 is an explanatory drawing in a side view of a body cover device (referred to as "a cover device", thereinafter) A for car according to the first embodiment, Fig.2 is a front view of the cover device A, Fig.3 is a plan view thereof and Fig.4 is an explanatory drawing showing the condition thereof during the period of usage.

As shown in Fig.4, the cover device A is formed to be stored in a trunk room 10 of a car 1 in use, and a body cover 2 for car can be semi-automatically delivered and automatically wound up. In Fig.4, reference numeral 11 represents a trunk lid, reference numeral 12 represents a rear glass and reference numeral 13 represents a rear sheet.

As shown in Fig.1 through Fig.3, the cover device A comprises a device main body 3 formed so that the body cover 2 can be delivered and wound up and a stand part 4 on which the device main body 3 is oscillatably installed in vertical, wherein an elastic supporting member B is installed extensibly on the stand part 4 so that the cover device A can be stored in the state of being resiliently supported between the inner walls of the trunk room 10 by the elastic supporting member B.

According to this embodiment, the elastic supporting member B can be resiliently supported in vertical and laid between a ceiling wall 14 and a bottom wall 15 of the trunk room 10, as shown in Fig.4.

The structure of the cover device A is detailed as follows:

The stand part 4, on which the device body 3 is associatively installed, consists of a pair of columns 40, 40 erected at a predetermined space. Each of the columns 40 has an outside cylinder 42 erected in the vicinity of one end of a long plate leg seat 41 with a shock absorbing material 41a, such as a rubber featuring antislipping, pasted on the lower face. A bottomed inside cylinder 43 is slidably fitted in the outside cylinder 42 and a bar 44 having a female screw portion 44a formed at the center is slidably fitted in the inside cylinder 43.

Further, a spring, namely, a coil spring 45 in this embodiment, is provided between the bottom of the bar 44 and the inside cylinder 43 for energizing the bar 44 upward.

To the female screw portion 44a of the bar 44, a threaded bar 45 is threadedly secured with a contact member 47 pivotally mounted at the end in an oscillatable manner for adjusting a projection length. The contact member 47 which is constructed by pasting the shock absorbing material 47b such as a rubber to a disc 47a having a bracket 47c associatively provided on the lower face has a bracket 47c connected to the upper end of the threaded bar 46 via a pivotal shaft 47d.

The coil spring 45, the bar 44, the threaded bar 46 and the contact member 47 as above-described constitute the elastic supporting member B, whereby the cover device A can be laid between the ceiling wall 14 and the bottom wall 15 of the trunk room 10.

Small cylinders 42a are associatively provided on the lower side of the circumference of the outside cylinder 42 and a connecting bar 5 bent at its ends is bridged between the small cylinders 42a for stabilizing the right and left columns 40, 40.

A supporting arm 6 is protruded from an approximately central portion of the inside cylinder 43 and the base end of a body arm 7 is oscillatably connected to the end of the supporting arm 6 via the pivotal shaft 60. The device body 3 is associatively provided at the end of the body arm 7.

The device main body 3 can be rotated about its axis, as required, and its installation position can be changed using an adjusting bolt 38.

The body arm 7 which consists of a first arm 71 connected to the supporting arm 6 and a second arm 72 secured to the first arm 71 so as to be slidable in the longitudinal direction can be set at a proper length by inserting a fixed bolt 73 passing through the second arm 72 between slits 74, 74 provided in the first arm 71.

A main body supporting coil spring 8 is laid between an approximately central portion of the body arm 7 and the vicinity of the approximately upper end of the inside cylinder 43 so that the device main body 3 can be supported at its spring-up position when the body of the car 1 is covered with the body cover 2 and the device main body 3 can be located close to a worker for ease of work.

Reference numeral 61 represents a stopper for restricting the spring-up position of the device main body 3 and reference numerals 80, 81 represent coil spring mounting brackets.

On the other hand, the device main body 3 is kept suspended during the period of no usage. The relatively heavier device main body 3 being kept suspended can be released from an overhung condition and stably stored in the trunk room 10.

As a result, the cover device A becomes easy and convenient to handle during the period of usage, and the least possible load is applied to the stand part 4 supporting the device main body 3 during running on a bad road, possibly preventing damage to the base end of the supporting arm 6 secured to the inside cylinder 43. In Fig.1, reference numeral 48 represents a tightener mounted at the upper end of the outside cylinder 42 to allow the inside cylinder 43 to be fixed at a given height with the operation of a lever 48a of the tightener 48. Reference numeral 50 represents a fixing bolt for fixing the connecting bar 5 at its bent end 51 into the small cylinder 42a.

The structure of the device main body 3 is described.

The device main body 3 includes a drum 30 on which the body cover 2 is wound and a delivery device 5 as driving means for rotating the drum 30 to the direction of the delivery of the body cover 2, the drum 30 being rotatably stored in a cylindrical exterior case 32 having a delivery and wind-up port 31.

Reference numerals 33a, 33b represent rotating shafts of the drum 30 and reference numerals 34, 34 represent bearings.

The drum 30 has a clutch disc 90 connected to the end of the rotating shaft 33a which is connected in association with the delivery device 9 via a one-way clutch C and protruded through the bearing 34 at one side into a protecting case 35 for the delivery device 9. The protecting case 35 is detachably mounted at one end of the exterior case 32.

A thrusting plate 91 which is energized to the clutch disc 90 by an energizing spring 92 and made slidable on the driving shaft 94 as a delivery shaft of the delivery device 9 via a boss portion 91a is provided in the protecting case 35 and a pin 91a protruded on the boss portion 91a is engaged with a link lever 93.

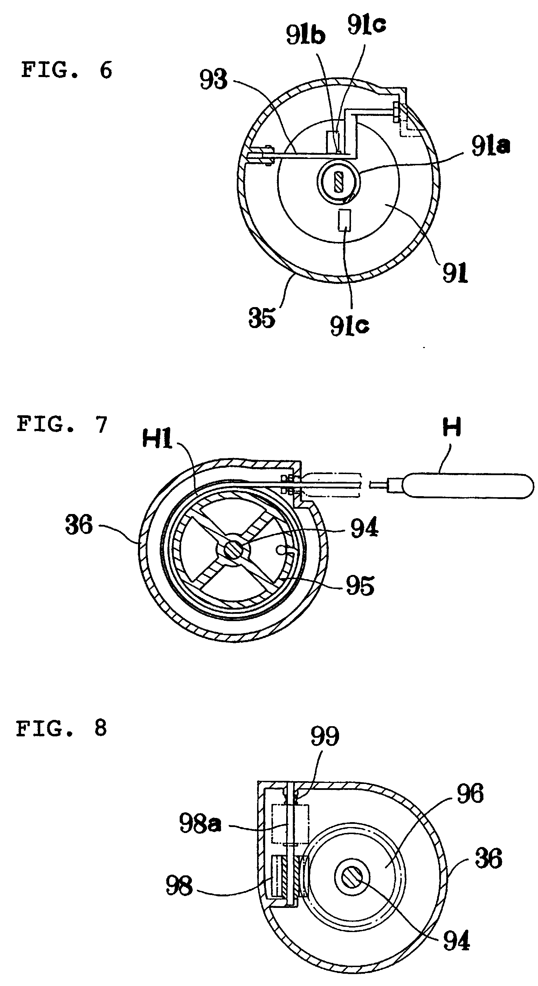

As shown in Fig.6, the thrusting plate 91 has pawl portions 91c, 91c to be engaged with the clutch disc 90 in only the direction of delivery of the body cover 2.

A cap case 36 is detachably mounted on the outside of the protecting case 35 and its terminal is pivotally supported by the bearing 37 with the driving shaft 94 protruded from the protecting case 35 into the cap case 36.

A pulley 95, a worm wheel 96 and a spiral spring 97 are arranged on the driving shaft 94 in order from the side of the protecting case 35. Reference numeral 97a represents a spring case for storing the spiral spring.

On the pulley 95, a rope H1 is wound which is connected and fixed at its base end to the pulley 95 and connected at its end to a handle H. When the handle H is pulled, then the worm wheel 96 and the spiral spring 97 together with the pulley 95 are rotated in the opposition direction of delivery of the body cover 2.

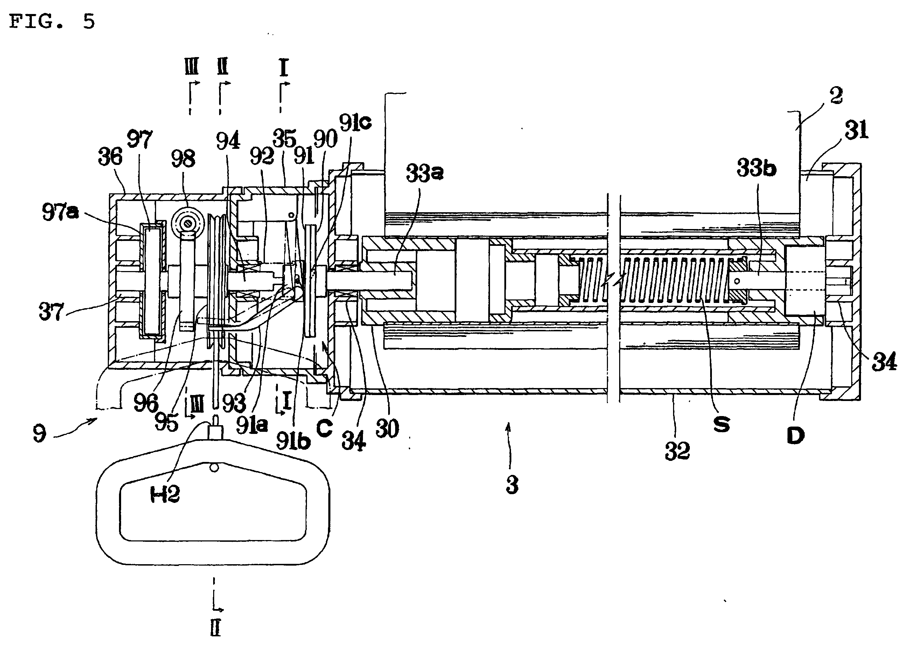

As shown in Fig.5 and Fig.8, a resistance worm 98 energized by the spring 99 is in mesh with the worm wheel 96. Reference numeral 98a represents a worm shaft.

When the worm wheel 96 is rotated, the worm 98 is shifted to the side of the spring 99 with the rotation, as shown in Fig.8, and prohibited from working as resistance so that the handle H can be pulled with ease and the spiral spring 97 can resiliently act to accumulate energy. At this time, the one-way clutch C runs idle to give no rotation of the rotating shaft 33a of the drum 33.

When the handle H is released, the driving shaft 94 is rotated with the resilience of the spiral spring 97, so that the rotating force is transmitted to the driving shaft 94, the one-way clutch C and the rotating shaft 33a in sequence to deliver the body cover 2. At this time, the worm 98 is in mesh with the worm wheel 6 again to produce meshing resistance which reduces the rotating speed of the driving shaft 94, so that the body cover 2 can be delivered at a proper speed.

The delivery length of the body cover 2 can be set properly, such that the end of the body cover 2 is grasped and pulled from the outside of the trunk room 10.

When the spiral spring 97 winds up all of the rope H1, the protruded end H2 of the handle H pushes up the link fever 93, as shown by a chain line in Fig.5, so that the thrusting plate 91 of the one-way clutch C is separated from the clutch disc 90 to brake the transmission between the delivery device 9 and the drum 30.

The cover device A according to this embodiment has a winder D on the drum 30 for winding the body cover 2 delivered.

As shown in Fig.5, a coil spring S connected at one end to the drum 30 and connected at the other end to the rotating shaft 33b is provided in the drum 30, and a known winder D with a stopper is mounted on the rotating shaft 33b.

In this structure, when the drum 30 is rotated for delivering the body cover 2 the body cover 2 can be delivered to a given position with energy being accumulated in the coil spring S, and when the body cover 2 is pulled slightly at its position the stopper of the winder D is set free, so that the drum 30 is turned back with the resilience of the coil spring S to provide wind-up of the body cover 2.

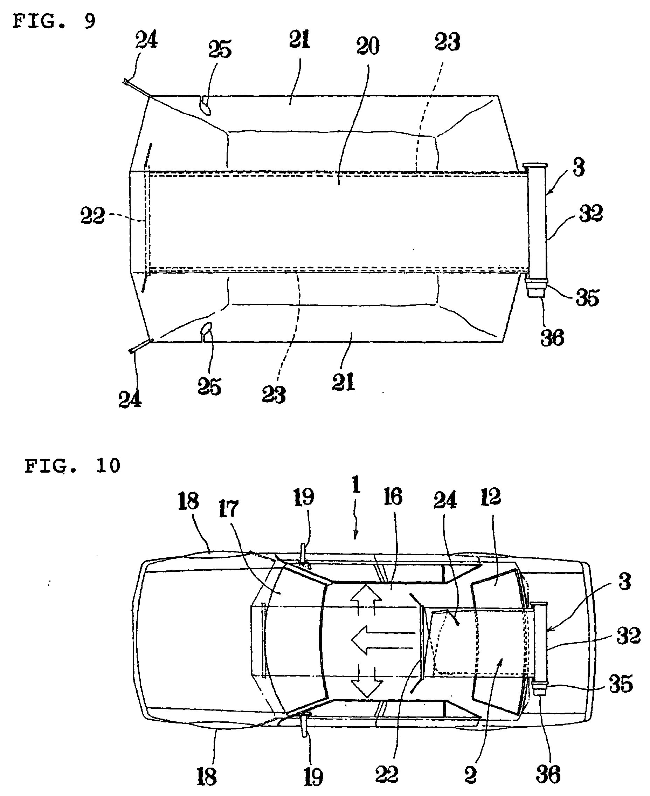

The body cover 2 employed in this embodiment consists of a main cover portion 20 for covering the rear glass 12 of the car body through a roof 16 and a front glass 17, and sleeve portions 21, 21 extending to the right and left thereof and seamed therewith corresponding to the shape of the car body, as shown in Fig.9 and Fig.10, wherein a grip bar 22 is mounted at the end of the main cover portion 20. At the right and left side of the main cover portion 20, namely, a joint between the sleeve portions 21, 21, a pair of core materials 23, 23 formed of spring steel materials are provided for preventing the deformation of the body cover 2 during delivery and wind-up.

The core materials 23 grant rigidity and flexibility to the body cover 2 to be easily delivered and moved from the trunk room 10 along the rear glass 12. The body cover 2, when stored, can be wound up on the drum 30 in order.

In Fig.9, reference numeral 24 represents a hook for locking the body cover 2 to the body of the car 1 and reference numeral 25 represents a cut portion for avoiding a door mirror 19 (refer to Fig.10). In Fig.10, reference numeral 18 represents a fender to which the hook 24 can be locked.

Processes for actually installing the cover device A according to this embodiment in the trunk room 10 of the car 1 so that the body cover 2 can be delivered to cover the car body and removing the body cover 2 to be stored in the trunk room 10 are described as follows:

As shown in Fig.4, the trunk lid 11 is opened and the cover device A is installed between a corner ceiling wall 14 formed of a relatively rigid frame and a bottom wall 15 of the trunk room 10.

The inside cylinder 43 of the stand part 4 is set at a proper height and the contact member 47 is pushed against the ceiling wall 14, and the bar 44 is turned to adjust the length of a leg bar 46 and the cover device A is supported with proper resilience. At this time, shock absorbing materials 41a, 47b mounted on the leg seat 41 and the contact member 47 contacting the walls 14, 15, respectively, prevent damage into the trunk room 10.

According to this embodiment, the cover device A can be set with extreme ease.

The installation position of the device main body 3 on the body arm 7 is adjusted to be the position of the device main body 3, when sprung up, using the adjusting bolt 38 so that the delivery and wind-up port 31 provided in the exterior case 32 may face a gap E formed between the base edge 11a of the trunk lid 11 and the corner edge of the trunk opening 10a or the delivered body cover 2 may move along the rear glass 12. It is needed for fine adjustment only because the device main body 3 is previously installed on the body arm 7 so that the delivery and wind-up port 31 may face the above-described gap E at a basic position.

For delivery of the body cover 2, the handle H of the device main body 3 is pulled this side and released. The drum 30 is rotated with the energy accumulated in the spiral spring 97 to allow the body cover 2 to move along the rear glass 12, as above-described.

Its rotating speed is optimized by the resistance of the worm 98 to provide smooth delivery of the body cover 2 along the rear glass 12.

As shown in Fig.10, the delivered body cover 2 is grasped at its end and pulled out along the car body, the sleeves 21, 21 of the body cover 2 are spread to the right and left and hooked to the car body with the hook 24 and then the trunk lid 11 is closed.

The body cover 2 which is firmly hooked at its front side with the hook 24 and locked at its rear side with the trunk lid 11 provides tight covering in a tensile condition. According to this embodiment, approximately semi-automatic covering of the car body can be carried out with extreme ease.

On the other hand, when the body cover 2 is stored in the trunk room 10, the trunk lid 11 is first opened, the hook 24 is reset, and the sleeves 21, 21 are folded over the main cover portion 20 and pulled slightly in the opposite direction of wind-up, so that the winder D is operated to rotate the drum 30 of the device main body 3, thus permitting automatic wind-up of the body cover 2 and storage in the trunk room 10. Finally, the trunk lid is just closed. According to this embodiment, as above-described, the body cover device A can be stored and arranged easily in the trunk room 10 without being modified and damaged and the body cover 2 can be delivered and wound up easily.

### 2^{nd} embodiment

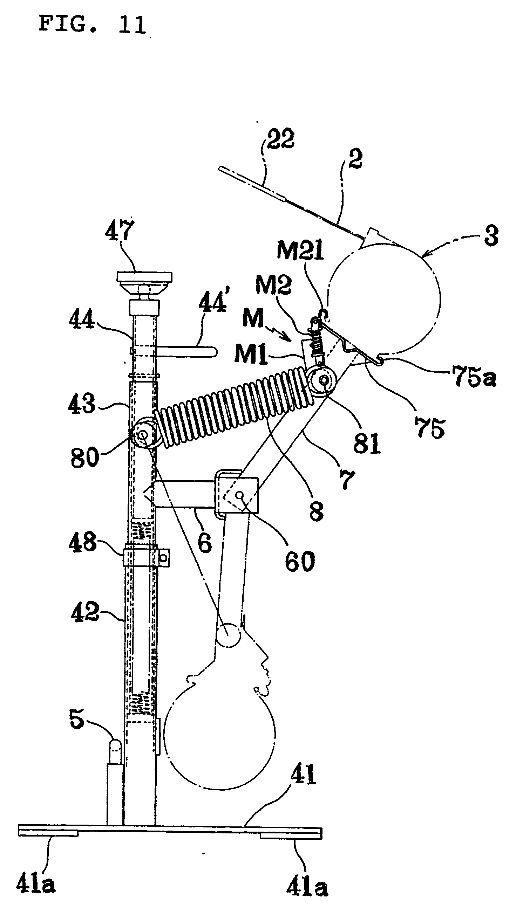

The second embodiment of this invention is described with reference to Fig. 11 through Fig. 15.

A structure in this embodiment is basically similar to that in the first embodiment, except that the device main body 3 as above-described in the first embodiment is detachably mounted on the stand part 4. Therefore, components in this embodiment, if similar to those in the first embodiment, employ the same reference numerals including those to be used in drawings.

As shown in Fig.11, Fig.13, Fig.14, this embodiment employs a detachable structure that a short rail member 75 is provided at the end of the body arm 7 of the stand part 4 and a sliding member 32a having a slidable plane correponding to the rail member 75 is formed on the exterior case 32 of the device main body 3.

The rail member 75 with one side edge folded inside to form an engagement edge 75a allows sliding operation it the engagement edge 75a and one side edge 32a' of the sliding member 32a are in engagement. The sliding member 32a with the other side edge extensibly bent upwardly at an angle to form a locking edge 32a'' allows locking/unlocking of the locking edge 32a'' via a locking member M, described thereafter, with one-touch operation.

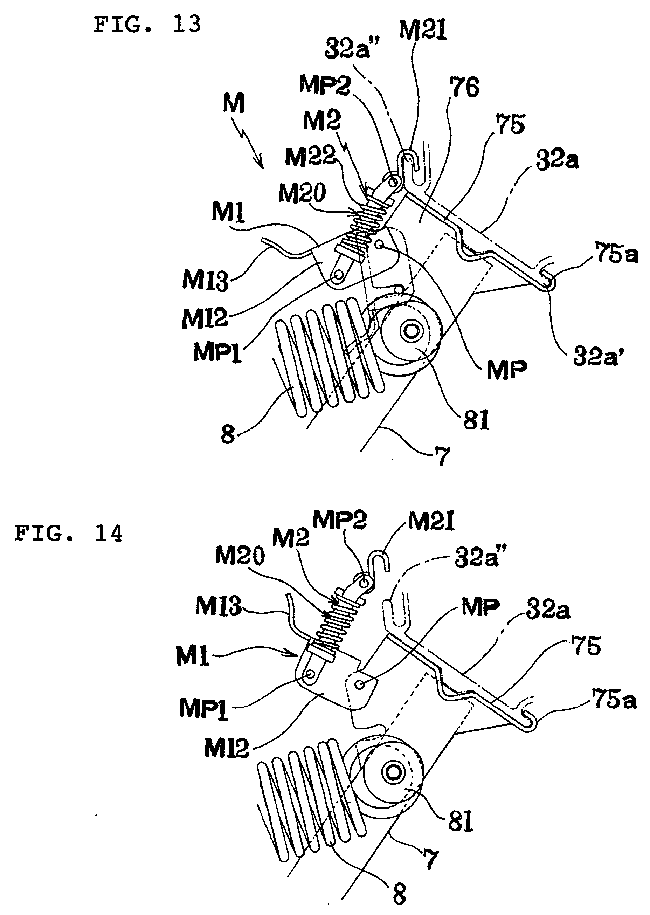

Namely, as shown in Fig.12 through Fig.14, a locking member mounting plate 76 is provided at the approximately upper end of the body arm 7 and the locking member M is mounted on the locking member mounting plate 76.

The locking member M consists of an approximately channeled rotationally moving lever M1 which is pivotally supported on the locking member mounting plate 76 and a locking portion M2 which is connected to the rotationally moving lever M1, wherein the right and left side faces M11, M12 of the rotationally moving lever M1 are pivotally connected in the vicinities of one ends via a pivotally supporting pin MP and right and left locking portion forming bars M20 are pivotally connected in the vicinity of the opposite end of the pivotally supporting pin MP. Reference numeral MP1 represents a pivotally supporting pin for each locking portion forming bar M20.

Locking pieces M21 to be engaged with the locking edges 32a'' via the pivotally supporting pin MP2 is secured to both ends of the right and left locking portion forming bars 20. In Fig., reference numeral M13 represents an operating piece associatively provided on the rotationally moving lever M' and reference numeral M22 represents a tensile coil spring mounted on the locking portion forming bar M20.

In this structure, after the device main body 3 is installed on the body arm 7, the locking pieces M21 of the locking member M are locked to the locking edges 32a'' of the device main body 3 and the rotationally moving lever M' of the locking member M is pushed down, whereby the device main body 3 can be installed on the body arm 7 of the stand part 4 simply and easily with one-touch operation.

On the other hand, for removal of the device main body 3, procedures are opposite to the above-described procedures. Namely, the rotationally moving lever M1 of the locking member M is pushed up and the locking pieces M21 are separated from the locking edges 32a'' of the device main body 3 (refer to Fig.14), and then the device main body 3 is slid to be removed from the body arm 7.

Further, in this embodiment, engagement means K is provided between the bar 44 of the stand part 4 and the inside cylinder 43 for engaging the bar 44, pushed down, with the inside cylinder 43.

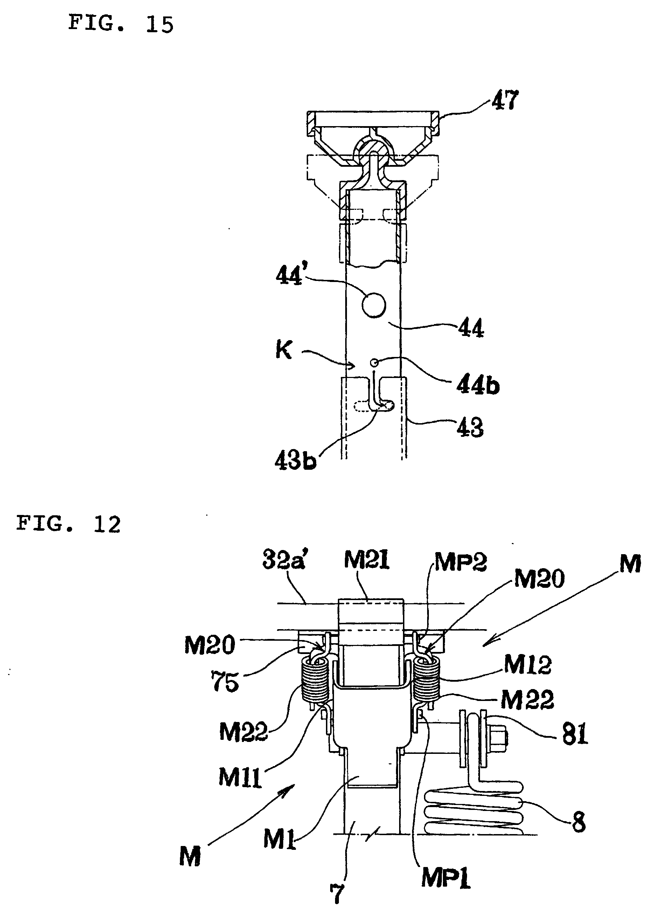

Namely, as shown in Fig.11 and Fig.15, a lever 44' is mounted on the upper side of the bar 44 of the stand part 4 and a spring pin 44b is provided on the lower side of the lever 44' in the form of passing through the bar 44 and protruding at both ends, while a L-shaped engagement channel 43b is formed in the inside cylinder 43 for engaging the end of the spring pin 44b. In this embodiment, the engagement means K is formed by the spring pin 44b and the engagement channel 43b.

In this embodiment, a contact member 47 provided at the upper end of bar 44 is formed to be rotationally movable in free directions.

Namely, a ball shaft 44c is provided at the upper end of the bar 44 and a recessed portion corresponding to the ball shaft 44c is formed in the lower face of the contact member 47, both of which are fitted together so that the contact member 47 is rotationally movable.

In this structure, when the stand part 4 is installed in the trunk room 10, the bar 44 is contracted with the lever 44' in hand and kept in contraction by the engagement means K, so that the upper part of the stand part 4 is free from contact with the ceiling wall 14 of the trunk room 10 to provide easy handling and easy installation of the stand part 4 at an accurate position. Then, if the engagement means K is released, the stand part 4 can be positively held in the accurate installation position. In this embodiment, the cover device A can be installed very easily, offering significantly more flexibility in operation.

As shown in Fig.11, this embodiment is differentiated from the first embodiment in the points of the length of the shock absorbing material 41a pasted to the reverse of the leg seat 41, the structure of the tightener 48 secured to the upper end of the outside cylinder 42 and the configuration of the coil spring mounting bracket 80 and the stopper 61 for restricting the spring-up position of the device main body 3, provided that the components are changeable in design into much better or the best components unless otherwise deviating from claims.

### 3^{rd} embodiment

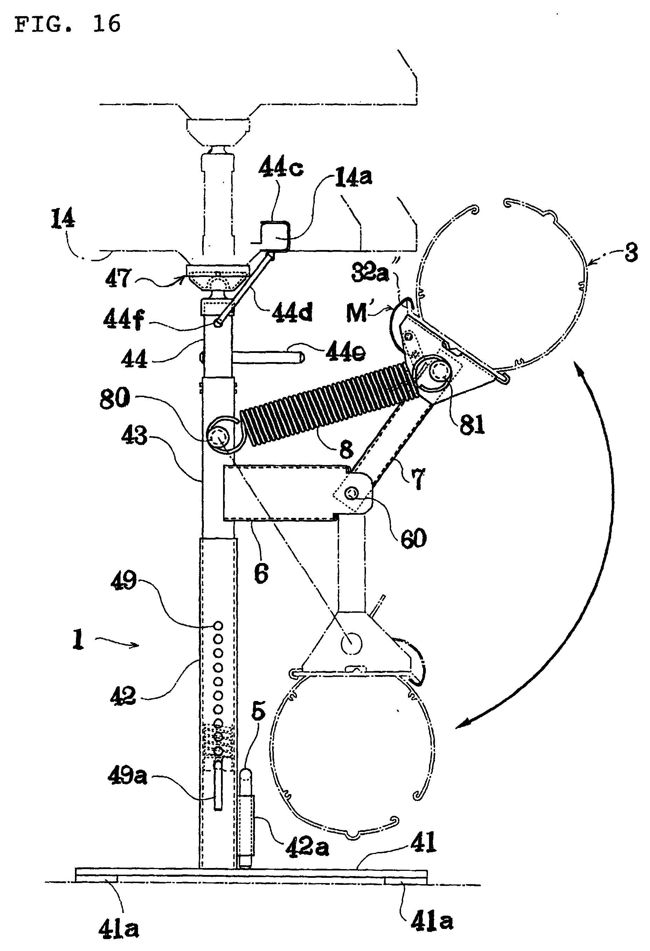

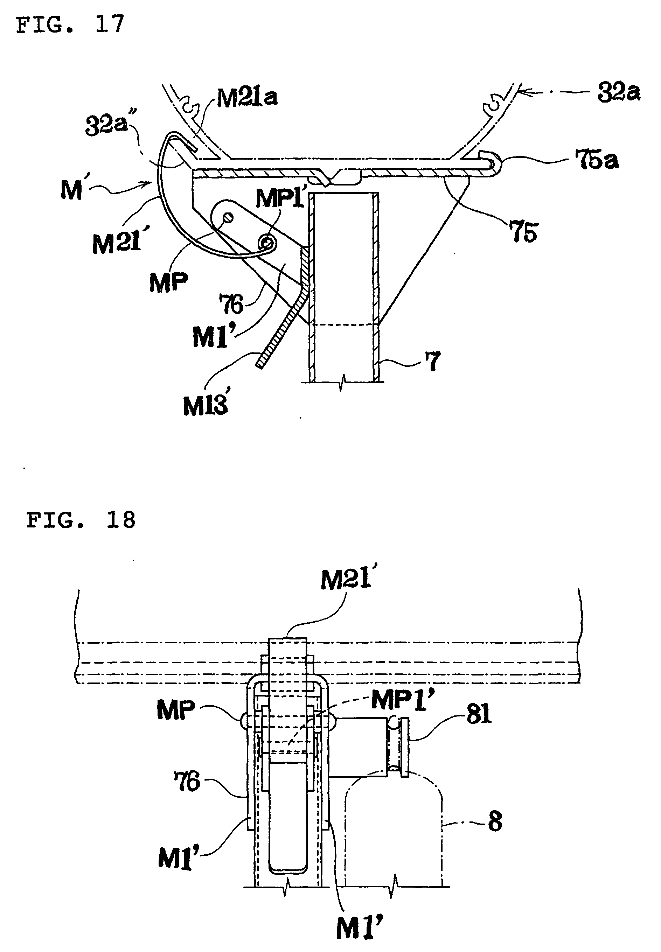

The third embodiment of this invention is described with reference to Fig.16 through Fig.18.

In this embodiment, the structure of the lock member M described in the second embodiment is simplified, white maintaining its function, to provide advantage in cost.

Namely, the structure of the locking member M according to this embodiment is such that rotationally moving lever structuring pieces M1', M1' rising up from the right and left base ends of an inversely V-shaped operating piece M3' are pivotally supported at their ends on the locking member mounting plate 76, a pivotally supporting pin MP1' is axially mounted at an approximately central portion of the rotationally moving lever structuring pieces M1', M1', and a locking spring M21', which is formed of a spring steel, folded at its end to form a locking portion M21a and formed into an approximately arched shape as a whole, is secured to the pivotally supporting pin MP1'.

In this embodiment, the device main body 3 can be installed on the body arm 7 of the stand part 4 easily with one-touch operation by the engagement of the locking portion M21a with the locking edge 32a'' on the side of the device main body 3.

Further, the simpler structure provides easy handling and advantage in cost.

As shown in Fig.16, the adjustment of the height of the stand part 4 is carried out by pinning between the outside cylinder 42 and the inside cylinder 43.

Namely, a number of positioning through-holes 49 are provided at small spaces in the outside cylinder 42, and the inside cylinder 43 is slid in the outside cylinder 42 until the stand part 4 is at a proper height where the stopper pin 49a is inserted in the positioning through-holes 49 to restrict the bottom position of the inside cylinder 43. The proper height of the stand part 4 is such that the coil spring 45 stored in the inside cylinder 43 sufficiently energizes the bar 44 upward to allow the contact member 47 to be resiliently supported.

The bar 44 is provided with a handle 44e for easily pushing the bar 44 down against the coil spring 45.

In this structure, easy setting of the stand part 4 into the trunk room 10, easy handling and more convenience are achieved.

Further, in this embodiment, as shown in Fig.16, a safety fixture is provided which consists of a piano wire 44c formed in U-shape on the bar 44 and a stranded band 44d connected thereto. The stranded band 44d is passed through a stepped hole 44f provided near the end of the bar 44 and the piano wire 44c secured to the stranded band 44d is locked to a relatively rigid beam portion 14a formed on the ceiling wall 14 of the trunk room 10, whereby the cover device A is prevented from moving out, falling and shifting when the car 1 suddenly brakes.

As above-described, in this embodiment, easy handling and cost reduction are achieved.

In this embodiment, the supporting arm 6 for supporting the device main body 3 is wider and stronger enough to withstand against a load due to the weight of the device main body 3 and the vibration of the car 1.

The components in this embodiment, if the same as those in the first embodiment, employs the same reference numerals.

### 4^{th} embodiment

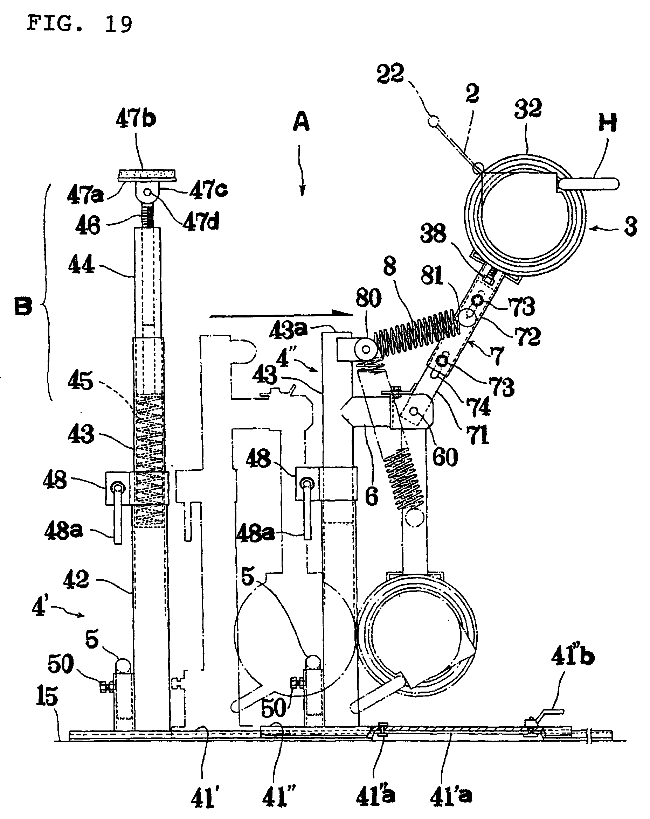

The fourth embodiment of this invention is described with reference to Fig.19.

This embodiment is differentiated from the first and second embodiments in that the stand part 4 in the previous embodiments is separated into a fixing stand portion 4' and a main body supporting stand 4'', a leg seat 4'' of the fixing stand portion 4' is formed in a rail shape and stepped on the bottom wall 15 of the trunk room 10 and a leg seat 41'' of the main body supporting stand portion 4'' is secured onto the rail-shaped leg seat 4'' so as to be slidable back and forth, wherein the upper end face 43a of the inside cylinder 43 of the main body supporting stand portion 4'' remain closed. Reference numeral 41'a represents a sliding slit provided in the leg seat 41' of the fixing stand portion 4', reference numeral 41''a represents a guide provided on the leg seat 41'' of the main body supporting stand portion 4'' and reference numeral 41''b represents a guide combining fixture.

In this structure, even if the depth of the trunk room 10 is significantly different in types and so the cover device A should be set at a posttion farther from the gap E formed between the base edge 11a of the trunk lid 11 an the corner edge of the trunk room opening 10a, the main body supporting stand portion 4'' can be slid this side during the period of usage and fixed at a proper position, therefore causing no inconvenience in use.

In Fig.19, the components of the fixing stand portion 4' and the main body supporting stand portion 4'', similar to those of the previous embodiments, employ the same reference numerals as those in the previous embodiments, not described herein.

### 5^{th} embodiment

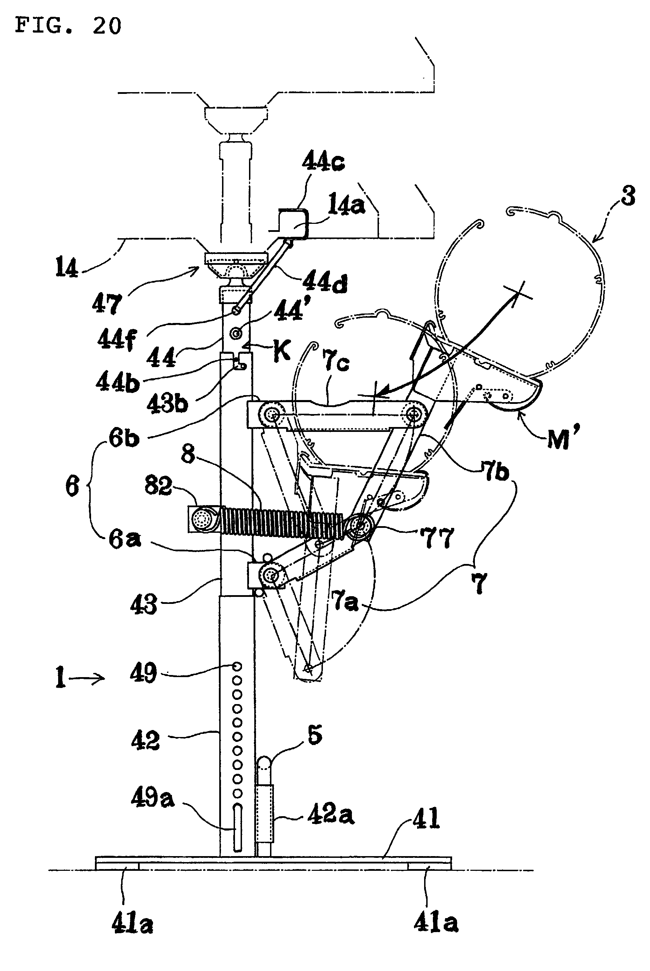

The fifth embodiment of this invention is described with reference to Fig.20. The components in this embodiment, if the same as those in the first through fourth embodiments, employ the same reference numerals.

In this embodiment, the supporting arm 6 and the body arm 7 supporting the device main body 3 are formed by linking mechanisms so that the device main body 3 can be stored during the period of no use in the state of being almost horizontally moved back and down in attitude during the period of use, rather than stored in the state of being suspended in the trunk room 10. Namely, as shown in Fig.20, the supporting arm 6 consists of a short supporting lower arm 6a and a supporting upper arm 6b protruded on the upper part and the lower part, respectively, of the inside cylinder 43 of the stand part 4 and the body arm 7 consists of a body lower arm 7a and a body upper arm 7b pivotally connected at their ends. The base end of the body lower arm 7a is pivotally connected to the supporting lower arm 6a and the end of the body upper arm 7b is pivotally connected to the supporting upper arm 6b via a connecting link arm 7c.

In the inside cylinder 43, a spring supporting bracket 82 is provided on the side of the supporting lower arm 6a between the supporting upper and lower arms 6b, 6a for connection between the spring supporting bracket 82 and a pivotal supporting portion 77, located between the body lower arm 7a and the body upper arm 7b, via a body supporting coil spring 8.

In this structure. as shown by a chain line in Fig.20, the supporting arm 6 and the body arm 7 are bent while working as link mechanisms, so that the device main body 3 can be stored after almost horizontally moved back and down in attitude during the period of usage.

Accordingly, a lower space in the trunk room 10 can be used widely enough to store other loadings easily when the body cover device A is being stored in the trunk room 10.

In this embodiment, a locking member M'' similar to the locking member M' described in the third embodiment (refer to Fig.6 and Fig.7) is used to easily attach/detach the device main body 3. In this embodiment, the mounting position of the locking member M'' is located at the opposite side of that in the third embodiment, namely, on the side of the trunk room opening 10a, thus providing more flexibility in operation.

Further, in this embodiment, similarly to the third embodiment, the adjustment of the height of the stand part 4 is carried out by pinning between the outside cylinder 42 and the inside cylinder 43 and a safety fixture is provided which consists of a piano wire 44c formed in U-shape on the bar 44 and a stranded band 44d connected thereto to prevent the cover device A from moving out, falling and shifting when the car 1 suddenly brakes.

This invention described through above-described embodiments is not limited to the above-described embodiments but changeable or replaceable unless otherwise deviating from meanings described in claims.

For example, the stand part 4 can be resiliently supported in the trunk room 10 not only in vertical but also crosswisely and the driving means for rotating the drum 30 to the direction of delivery of the body cover can be in an electrical structure using a motor or others, rather than in a mechanical structure.

### INDUSTRIAL UTILIZATION

The invention which is embodied in above-described configuration provides following advantages:
(1) According to claim 1 of the invention, the cover device for car which comprises the device main body formed so that the body cover for car can be delivered and wound up and the stand part on which the device main body is installed, wherein the elastic supporting member is installed extensibly on the stand part so that the cover device can be stored in the state of being resiliently supported between the inner walls of the trunk room, can be stored and arranged easily and put into practical use without modifying and damaging the trunk room and still used more conveniently because of easy wind-up and delivery of the body cover.
(2) According to claim 2 of the invention, the elastic supporting member can be resiliently supported in vertical in the trunk room so that the cover device can be formed to be resiliently supported at the most rigid position of the trunk room structure, resulting in a further increase in advantage according to the above-described (1).
(3) According to claim 3 of the invention, the device main body is installed on the stand part in a vertically oscillatable manner so as to be supported at its spring-up position during the period of usage and suspended during the period of no usage, whereby the cover device offers easy handling of the body cover and the relatively heavier body cover can be stored stably in the trunk room during the period of no usage, permitting the least possible load on the stand part during running on a bad road and improving durability.
(4) According to claim 4 of the invention, the device main body is installed on the stand part so that the body cover delivery and wind-up port provided in the device main body faces the gap formed between the base edge of the trunk lid and the edge of the trunk room opening, ensuring delivery of the body cover at its end out of the gap formed between the base edge of the trunk lid and the edge of the trunk room to the side of the rear glass and allowing a user to pull the body cover out easily for more convenience in use.
(5) According to clam 5 of the invention, the device main body comprises a drum on which the body cover is wound and driving means for rotating the drum to the direction of delivery of the body cover, so that the body cover can be semi-automatically delivered and the body of the car can be covered very easily.
(6) According to claim 6 of the invention, the driving means for rotating the drum to the direction of delivery of the body cover includes the delivery shaft mounted with the spring and connected to the drum on which the body cover is wound via the one-way clutch and energy accumulating means for resiliently acting the spring with the rotation of the delivery shaft in the opposite direction of delivery of the body cover so that the delivery shaft can be rotated with the resilience of the spring following the operation of the energy accumulating means to allow easy delivery of the body cover with simple mechanical operation.
(7) According to claim 7 of the invention, the winder for winding the delivered body cover is provided on the drum on which the body cover is wound to allow automatic wind-up and storage of the body cover in the trunk room and easy work for body covering through body cover storage, requiring much labor.
(8) According to claim 8 of the invention, in order to prevent the deformation of the body cover during delivery and windup, the pair of core materials extending in parallel to the direction of delivery and wind-up is provided on the body cover to allow smooth delivery and windup of the body cover.
(9) According to claim 9 of the invention, the device main body is detachably mounted on the stand part so that the device main body can be removed and stored during the period of no use and easily mounted during the period of usage, providing more convenience in use.
(10) According to claim 10 of the invention, the stand part comprises the outside cylinder erected on the leg seat, the bottomed inside cylinder slidably arranged in the outside cylinder and oscillatably mounted with the device main body, the bar slidably arranged in the inside cylinder and provided with the contact member at the end, and the spring laid between the bottom of the bar and the bottom of the inside cylinder, so that the stand part can be stored and fixed to the trunk lid in a simple structure.
(11) According to claim 11 the invention, the engagement means is provided between the bar and the inside cylinder so as to be locked to the inside cylinder at the position of pushing down the bar so that the cover device can be fixed to the trunk lid easily.

## Claims

1. A body cover device for car comprising a device main body (3) formed so that a body cover for car can be delivered and wound up and a stand part (4) on which same device main body (3) is installed, wherein an elastic supporting member (B) is installed extensibly on said stand part (4) so that said cover device can be stored in the state of being resiliently supported between the inner walls of a trunk room (10) by the elastic supporting member (B).

2. The body cover device for car of claim 1, wherein said elastic supporting member (B) is resiliently supported in vertical in said trunk room (10).

3. The body cover device for car of claim 1, wherein said device main body (3) is oscillatably installed on the said stand part (4) in vertical so that said device main body (3) can be supported at its spring-up position during the period of usage and suspended during the period of no usage.

4. The body cover device for car of one of claims 1 through 3, wherein said device main body (3) is installed on said stand part (4) so that a delivery and windup port (31) for said body cover (2), provided in said device main body (3), may face a gap (E) formed between the base edge (11a) of a trunk lid (11) and the edge of a trunk room opening (10a).

5. The body cover device for car of claim 4, wherein said device main body (3) comprises a drum (30) on which said body cover (2) is wound and driving means (9) for rotating said drum (30) to the direction of delivery of said body cover (2).

6. The body cover device for car of claim 5, wherein said driving means (9) for rotating said drum (30) to the direction of delivery of said body cover (2) comprises a delivery shaft (94) mounted with a spring (97) and connected to comprises a delivery shaft (94) mounted with a spring (97) and connected to said drum (30) on which said body cover (2) is wound via a one-way clutch (C) and energy accumulating means for resiliently acting said spring (97) with the rotation of said delivery shaft (94) in the opposite direction of delivery of said body cover (2) so that said delivery shaft (94) can be rotated with the resilience of said spring (97) following the operation of said energy accumulating means to allow the delivery of said body cover (2).

7. The body cover device for car of claim 5, wherein a winder (D) is provided on said drum (30), on which said body cover (2) is wound, for winding said delivered body cover (2).

8. The body cover device for car of claim 1, wherein, in order to prevent the deformation of said body cover (2) during delivery and windup, a pair of core materials (23) extending in parallel to the direction of delivery and windup are provided on said body cover (2).

9. The body cover device for car of claim 1, wherein said device main body (3) is detachably mounted on said stand part (4).

10. The body cover device for car of claim 1, wherein said stand part (4) comprises:
an outside cylinder 42 erected on a leg seat (41);
an bottomed inside cylinder (43) slidably arranged in said outside cylinder (42) and oscillatably mounted with said device main body (3);
a bar (44) slidably arranged in said inside cylinder (43) and provided with a contact member (47) at the end; and
a spring (45) laid between the bottom of said bar (44) and the bottom of said inside cylinder (43).

11. The body cover device for car of claim 10, wherein engagement means (K) is provided between said bar (44) and said inside cylinder (43) so as to be locked to said inside cylinder (43) at a position of pushing down said bar (44).
